Europäisches Patentamt

European Patent Office

Office européen des brevets

(11) Publication number: **0 282 177**
**A2**

## (12) EUROPEAN PATENT APPLICATION

(21) Application number: 88301278.3

(22) Date of filing: 16.02.88

(51) Int. Cl.4: **B01J 41/14**

(30) Priority: 09.03.87 US 23480

(43) Date of publication of application:
14.09.88 Bulletin 88/37

(84) Designated Contracting States:
DE FR GB IT NL

(71) Applicant: DIONEX CORPORATION
1228 Titan Way
Sunnyvale California 94086(US)

(72) Inventor: Pohl, Christopher Andrew
32940 Soquel Street
Union City California 94587(US)
Inventor: Papanu, Steven Charles
883 Lundy Lane
Los Altos California 94022(US)
Inventor: Ebenhahn, William Maxim
1119 Park Watson Place
San Jose California 95136(US)

(74) Representative: Allard, Susan Joyce et al
BOULT, WADE & TENNANT 27 Furnival Street
London EC4A 1PQ(GB)

(54) Anion exchange resin with an acrylic resin outer layer.

㉗ A latex of microporous acrylic resin particles having anion exchange sites at their exposed surfaces in an anion exchange composition. The layering particles are microporous acrylic resin particles with anion exchange sites, preferably amines, on their exposed surfaces. The acrylic resin includes a copolymer backbone of a hydrophilic acrylic functional monomer and a hydrophilic diethylenically unsaturated cross-linked monomer. In a preferred embodiment, the acrylic resin particles are a terpolymer formed by polymerizing the functional monomer and cross-linking monomer in the presence of a hydrophilic non-functional ethylenically unsaturated spacer monomer which also forms part of the copolymer backbone.

## ANION EXCHANGE RESIN WITH AN ACRYLIC RESIN OUTER LAYER

The present invention relates to a composition which is useful for performing liquid ion chromatography in a packed column.

In Small, et al. U.S. Patent No. 4,252,644, a high performance ion exchange composition is described which includes component A, an insoluble synthetic resin substrate, having ion exchange sites on its available surface, and component B, finely divided synthetic resin particles having opposite ion exchange sites on their outer surfaces. Component B is irreversibly attached as a monolayer to component A. For use as an anion exchange resin, the patent describes a preparation of surface sulfonated styrene-divinylbenzene (DVB) resin beads of a desired particle size as component A. A preferred component B is described as a latex of polyvinylbenzyl chloride cross-linked with ethylene diamine. There is an isolated suggestion of using other resins including polyacrylic and polymethacrylic resins but no details of their formation or advantages. The cross-linked resin is functionalized by treatment with trimethylamine or dimethylethanolamine. For anion exchange, the preferred composition includes surface sulfonated resin beads of styrene-DVB copolymer to the surface to which is irreversibly attached a monolayer of quarternary ammonium-bearing vinylbenzylchloride-DVB copolymer resin particles in the hydroxy form.

Such coated resin particles are very useful as the packing for the first chromatographic separation stage of ion chromatography. In that technique, after elution from said first stage, the solution is passed through a second suppression stage, followed by detection, typically by an ion conductivity detector. In the first stage, ions of an injected sample are eluted through the separation column using an electrolyte as the eluent. In the second stage, the electrical conductivity of the electrolyte is suppressed but not that of the separated ions so that the latter may be determined by a conductivity cell. This technique is described in detail in U.S. Patent Nos. 3,897,213, 3,920,397, 3,925,019 and 3,296,559. Suppression or stripping of the electrolyte is described in the above patents using ion exchange resin. A different form of suppressor is described in published European application No. 32770 in which a charged membrane, typically in the form of a fiber or flat plate, is used in place of the resin.

While the above polyalkyl aromatic particle latex materials are highly useful as layering particles for the agglomerated resin compositions of the prior art, there is room for improvement in certain applications. For example, it would be very beneficial to form a composition which is capable of very fast runs.

It has been suggested to replace the component B of the latices with ones synthesized from acrylic monomers and that by cross-linking with diacrylic monomers in the latex formulation, selectivity of the composition of high performance for ion chromatography is affected. This was set forth in an abstract entitled A Comparison of Ion Exchanges Latices For High Performance Ion Chromatography, abstract 4a-02, Ebenhahn, M. and Pohl, C., Eight International Symposium on Column Liquid Chromatography (1984). However, the abstract presents insufficient detail to form the composition.

Acrylic resins have been marketed for other purposes. For example, Separon HEMA 300 resin (described as an hydroxyethyl methacrylate and ethylene dimethacrylate-spaced sorbent for use in low-pressure or preparative chromatography.) Similarly, Separon HEMA DEAE and Separon HEMA 300 DEAE are described as weakly basic ion exchangers primarily designed for protein chromatography. A related Separon HEMA 1000 is described as a sorbent formed of hydroxyethyl methacrylate and ethylene dimethacrylate. All of these products are macroporous and not in latex form. There is no suggestion that they would be useful as the separation medium for ion chromatography or that they could be used as a surface layer for an agglomerated product such as described above.

In accordance with the present invention, a latex of microporous acrylic resin particles having anion exchange sites at their exposed surfaces are used to form an anion exchange composition which is capable of a fast run, e.g. less than two minutes, for the seven common anions (fluoride, chloride, nitride, bromide, nitrate, phosphate and sulfate). More specifically, this is accomplished by appropriate cross-linking levels to produce a polymer of relatively low selectivity making possible even spacing among the common anions which are monovalent.

The specific latex particles useful as the layering particles are microporous acrylic resin particles with anion exchange sites, preferably amines, on their exposed surfaces. The acrylic resin includes a co-polymer backbone of a hydrophilic acrylic functional monomer and a hydrophilic diethylenically unsaturated cross-linked monomer. The functional monomer includes reactive groups covalently bound to the anion exchange sites. The cross-linking monomer spaces apart the reactive groups in the backbone and also cross-links adjacent polymer chains. In a preferred embodiment, the acrylic resin particles are a terpolymer formed by polymerizing the functional monomer and cross-linking monomer in the presence of a hydrophilic non-functional ethylenically unsaturated spacer monomer which also forms part of the copolymer backbone.

The functional monomer, preferably glycidyl acrylate or glycidyl methacrylate, are present at about 20% to 90% of the copolymer. (As used herein, the term percent (%) refers to weight percent.) Correspondingly, the acrylic resin particles include from about 10% to 80% of the total of the spacer monomer and cross-linking agent and, specifically, 8% to 50% of cross-linking agent. Suitable cross-linking monomers are ethylene or diethylene glycol diacrylate or dimethacrylate. Suitable space monomers include alkylacrylates.

In the present invention, acrylic resin layering particles including anion exchanging sites are coated as a latex onto insoluble substrate particles. (As used herein, the terms "acrylic" and "acrylates" include the monomers acrylic acid, methacrylic acid, and their alkyl derivatives, and polymers based thereon.)

The component A particles with cation exchanging sites on their outer surface described in Small, et al Patent 4,252,644, are useful as the substrate particles in the present invention. Specific ones include the surface sulfonated beads of cross-linked poly (vinyl aromatic) resin, specifically styrene-DVB copolymer containing about 2% to about 8% DVB monomer by weight. The substrate particles may be macroporous or microporous as defined in Meitzner, et al. Patent No. 4,224,415.

Other synthetic resin particles including cation exchanging sites may also be used as the substrate particles. Suitable resins include fully functional acrylic type cation exchangers in either weak or strong acid form.

It has also been found that inorganic oxide particles may also be used as the substrate of the present invention because they, too, have cation exchange sites.

Suitable inorganic oxides include alumina, silica, zirconium dioxide, lead dioxide, and tin dioxide.

Suitable particle sizes for the substrate particles are from 2 to 100 microns, typically 5 to 20 microns.

A significant aspect of the present invention comprises the acrylic resin layering particles. Preferably they are formed by coating from a latex of microporous acrylic resin particles having anion exchange sites at their exposed surfaces.

Suitable anion exchange sites include primary, secondary, and tertiary amines which form the corresponding secondary, and tertiary amines, and quarternary ammonium groups. Particularly effective anion exchange sites are quaternary ammonium groups. Other anion exchange sites include phosphonium and sulfonium groups.

A highly effective acrylic resin comprises a copolymer backbone of a hydrophilic acrylic functional monomer and a hydrophilic diethylenically unsaturated cross-linking monomer. The functional monomer includes reactive groups through which the copolymer backbone is covalently bound to the anion exchange sites. The cross-linking monomer spaces apart the reactive groups in the backbone and also cross-links adjacent polymer chains. A particularly effective acrylic resin particle is formed of a terpolymer in which the functional monomer and cross-linking monomer are polymerized in the presence of a hydrophilic non-functional ethylenically unsaturated spacer monomer which also forms part of the copolymer backbone.

Suitable functional monomers include glycidyl acrylate and glycidyl alkylacrylates such as glycidyl methacrylate. They are preferred because of their high reactivity with amines. Such acrylates polymerize through a vinyl bond. They are covalently reacted with the amines to form the anion exchanging site in accordance with known procedures. For example, a tertiary amine such as trimethylamine may be reacted with the epoxy group of the glycidyl acrylate to form a quarternary amine. It is helpful to have a hydroxyl site near the amine for purposes of increasing the hydrophilicity of the ion exchange site. This type of reaction is described in Shell Technical Bulletin, "Epichlorohydrin," IC:69-16 (1969) page 29. Other possible functional monomers, with in situ amine groups, include dimethylaminoethylmethacrylate and diethylaminoethylmethacrylate.

The acrylic cross-linking monomers are hydrophilic and flexible in comparison to DVB. They include two ethylenically unsaturated groups in a relatively long chain between such groups. Suitable acrylic cross-linking monomers include ethylene glycol diacrylate, diethylene glycol diacrylate, ethylene (or diethylene) glycol dimethacrylate, triethylene glycol diacrylate, triethlyene glycol dimethacrylate polyethylene (4 or more ethylene groups) glycol dimethacrylate, and glyceryl trimethacrylate.

A third and optional component is a spacer monomer which preferably is also acrylic based. A suitable spacer monomer is methyl acrylate. The purpose of the spacer monomer is to reduce the charge density of the anion exchange sites by spacing apart the reactive groups to which such exchange sites are attached. The spacer monomer, when employed, is non-reactive toward the amine. It is useful when the cross-linking would otherwise be too extensive. It is preferably hydrophilic and resistant to hydrolysis. Other possible spacer monomers include methyl methacrylate, ethyl acrylate, ethyl methacrylate, hydroxyethyl methacrylate, hydroxyethyl acrylate, and glyceryl mono-methacrylate.

The ratio of the functional monomer to the cross-linking monomer, and, if present, the optional spacer monomer, can significally affect the chromatographic properties of the composition.

For example, a high degree of cross-linking increases the speed of the run. However, if excessive, cross-linking can lead to a decrease in the efficiency of separation. Also, very high degrees of cross-linking can lead to undesirable destabilizing of the latex.

It has been found that the functional monomer should be present at about 20% to 90% of the copolymer backbone. Preferably, the functional monomer comprises about 20% to 65%, or optimally from about 25% to 35% of the copolymer. Correspondingly, the combination of the cross-linking agent and spacing monomer, if any, preferably comprises about 10% to 80% of the copolymer and, more preferably, from about 55% to 65%. Of that, the cross-linking agent preferably comprises about 8% to 50% and preferably 30% to 50%.

The form of the particles are preferably microporous rather than macroporous. The differences between the two are defined in Meitzner Patent No. 4,224,415.

When compositions formed with latices of the foregoing type are used as packing, they result in a fast chromatographic run in which the spacing of adjacent monovalent anions are substantially more uniform than the corresponding poly (alkyl aromatic) composition of the prior art.

The general procedures in forming the latex are set forth in the aforementioned Small, et al. 4,252,644 patent. However, there are some changes in condition to permit a high degree of cross-linking using the acrylic polymers of the present invention without precipitation of the latex particles.

The techniques of initiating polymerization in the latex are well known. Suitable initiators include the free radical chain mechanism which can be initiated, e.g. by a persulfate/metabisulfite combination. Other initiation systems are well known including other persulfates or perborates, percarbonates, and also azo-bis compounds such as VAZO 64, VAZO 52, VAZO 33 (DuPont), VA-044 (Wako Chemical), and also organic peroxides such as lauryl peroxide, and benzoyl peroxide.

The surfactant can also affect the stability of the system. Anionic, cationic, nonionic and amphoteric may be used. Suitable specific surfactants include sodium lauryl sulfate, sodium dodecyl benzene sulfonate, hexadecyl trimethylammonium bromide, ethoxylated nonyl and octyl phenol such as Igepal CA-720 or Igepal DM-880 (GAF Corporation), sodiumcocoamphopropionate, and sodiumcocoamphopropylsulfonate.

Suitable size ranges for the layering particles are from 20 to 10,000 angstroms. The main lower limit for the layering particles relates to the processing techniques for forming small particles rather than to any limitations as to their chromatographic properties.

The procedure for producing packed columns containing support particles coated with layering or coating particles is to first pack the support particles into a column. Any number of the methods of packing known to those skilled in the art of high performance chromatographic column packing can be used to pack the support particles. One method is to fill a 20″ × 3/8″ (7mm. 1.D.) stainless steel tubular reservoir with 3 grams of resin slurried in 27 grams of 0.5 M NaOH, with the reservoir suitably heated to 60°C. The slurry is then pumped into a column with a pneumatic amplifier-type pump set to produce an output pressure of 3200 psi. The pumping fluid in this case is 0.2 M NaOH. The column is a 250mm × 1/4″ (4mm I.D.) tube made of suitable strength to withstand the packing conditions.

After packing the column with support particles the column is then treated with the layering particles. The aminated layering particles are first diluted to between 2% and 20% in water, then filtered through a 0.45 micron filter, and finally pumped through the column at a flow rate between 0.1 ml/min. and 3 ml/min. The column is then rinsed with eluant for 1/2 hour prior to use.

A further disclosure of the nature of the invention is as provided by the following specific examples of its practice.

## Example 1

In this example, an acrylic terpolymer latex is formed. In a screw-top, glass battle, mix and dissolve together 97.42 g d.i. water, 0.13g potassium persulfate, and 1.50 g sodium dodecyl sulfate (high purity, 99 + %). Add a monomer phase composed of 6.0 g glycidyl methacrylate + 8.0 g diethylene glycol dimethacrylate + 6 g methylmethacrylate. Stir the two phase mixture vigorously for 5-10 minutes while flushing or purging the bottle headspace with inert gas (argon). Remove the stir bar, add 0.95 g of 10% sodium metabisulfite ($Na_2S_2O_5$) solution and quickly cap the bottle to maximize exclusion of oxygen. Tumble the bottle end-over-end in a warm water bath at 32°C for 14-24 hours. This procedure produces a clean, coaggulum free latex with an average particle diameter of 580 angstroms. The product is called a raw terpolymer acrylate latex.

## Example 2

In this example, the latex particles are aminated to form quarternary ammonium ion exchange sites.

Take 30 g of the raw latex from Example 1 and mix it with an amination solution of this composition: 12 g d.i. water + 11.0 g 20% solution of Igepal DM-880 (a non-ionic surfactant, GAF Corporation) + 6.0 g dimethylethanol amine. Mix thoroughly and store in a closed container at 50°C for 40 hours. This produces a useful anion exchange latex that can be employed in ion chromatography as taught in prior art. The resulting latex has a 740 angstrom average particle diameter.

## Example 3

The latex of Example 2 is formed into an agglomerated composition useful for anion exchange chromatography as follows:

Three grams of 15 ± 1 micron polystyrene resin containing 2% divinyl benzene were slurried in 27 grams of 0.5M NaOH. The slurry was then added to a reservoir suitably heated to 60°C and packed into a 4mm I.D. × 250mm plastic column. The column was packed at 3200 psi with a Haskel DSTV122 packing pump using 0.2M NaOH as the packing fluid for a period of five minutes. A 10% aqueous dilution of the latex from Example 2 was pumped over the column at 0.5 ml/min until latex was observed in the column effluent. The column was then rinsed with eluant (2mM $Na_2CO_3$, 0.25 mM $NaHCO_3$) for 1/2 hour prior to use.

## Example 4

The column of Example 3 was inserted into an ion chromatograph with an Anion Micro Membrane Suppressor (Dionex Part No. 037072) connected after the column in the fluid path. A 0.02 ml sample of an aqueous solution containing 1.5ppm fluoride, 3ppm chloride, 5ppm nitrite, 10ppm bromide, 10ppm nitrate, 15ppm phosphate and 15ppm sulfate was injected into the eluant stream, having a flowrate of 2 ml/min. The resulting chromatogram shows rapid elution of sample anions in 2.2 minutes with baseline resolution of all anions.

## Example 5

The latex composition of Example 4 was modified and formed into an agglomerated resin as follows:

The latex was synthesized in exactly the same manner as Example 1 except that the monomer phase consisted of 18.0 grams of glycidyl methacrylate and 2.0 grams of diethylene glycol dimethacrylate and no methyl methacrylate.

Thirty-five grams of latex produced in Example 5 was then added to 365 grams of solution containing 6.13 g of potassium iodide and 18.25 g of Igepal DM-880. To this, 44.3 g of 1 molar dimethyl ethanol amine was added. The resulting mixture was then stored at 50°C for 5.4 hours in order to allow complete reaction. A 10% aqueous dilution of the resulting product was pumped over a column packed as described in Example 3. The resulting column was rinsed with eluant (3.9mM $NaHCO_3$, 3.1 mM $Na_2CO_3$) for 1 hour.

## Example 6

The seven anions of Example 4 were chromatographically resolved with the above eluant at 1 ml/min using the separation column of Example 5. The resulting chromatogram showed resolution of the seven anions with sulfate (the last eluting anion) eluting at 11.8 minutes. The chromatogram shows more space between the various anions, particularly between nitrite and phosphate and between nitrate and sulfate than in Example 4.

## Example 7

The animated latex composition of Example 5 was modified as follows:

The latex was synthesized as in Example 1 except the monomer content and batch size were altered. The aqueous phase consisted of 292.26 g of d.i. water, 4.50 g sodium dodecyl sulfate and .39 g potassium persulfate. The monomer phase consisted of 36 g glycidyl methacrylate, 12 g diethyleneglycol dimethacrylate and 12 g methyl methacrylate.

Amination of the latex from Example 7 consisted of dissolving 9.41 grams of dimethylethanol amine in 40.59 grams of a 5% solution of Igepal DM-880 and then addition of 50 g of raw latex. The resulting mixture was then stored at 50°C for 21 hours. The resulting latex was used to make a column as in Example 6.

## Example 8

The same seven anions were resolved on the column of Example 7. The resulting chromatogram showed elution of all seven sample anion completed with the elution of sulfate in 6.3 minutes. The seven sample anions were all baseline resolved, but the chloride-nitrite and bromide-nitrate pairs were so close together that this appeared to be the minimum elution speed without loss of resolution.

## Example 9

The latex was synthesized as in Example 1 except for monomer content. In this case, the monomer phase consisted of 4.0 g of glycidyl methacrylate, 10 g of diethylene glycol dimethacrylate·and 6.0 g of methyl methacrylate. The amination of the resulting latex was as in Example 2. The resulting latex was used to make a column which was both produced and tested as in Example 6. The resulting column produced a column which showed elution of sulfate (the final anion) in 2.4 minutes. The chromatogram showed the anions resolved with no pair of peaks resolved better than 80%. Nitrate peak symmetry was not as good as in the previous examples.

## Example 10

A 250 mm × 1/4″ (4.6mm I.D.) stainless steel column was packed with 10±1 micron Spherisorb alumina using a packing solution of methanol and a packing pressure of 7,000 psi. The resulting column was coated with the latex from Example 9 which had been aminated, filtered, and diluted to 10% in water. The column was coated at 0.1 ml/min until breakthrough of excess latex was observed and then rinsed and tested as in Example 4 except that a 1 ml/min flowrate was used. The resulting chromatogram showed elution of sulfate in 6 minutes with co-elution of phosphate. The chromatogram showed resolution of the remaining anions except for fluoride which did not elute.

## Claims

1. A latex of microporous acrylic resin particles having anion exchanging sites at their exposed surfaces, the acrylic resin comprising a copolymer backbone of a hydrophilic acrylic functional monomer and a hydrophilic diethylenically unsaturated cross-linking monomer, the functional monomer including reactive groups covalently bound to anion exchanging sites, the cross-linking monomer spacing apart the reactive groups in the backbone and also cross-linking adjacent polymer chains.

2. A latex as claimed in claim 1 in which the anion exchange sites are amine groups, quaternary ammonium groups, phosphonium groups or sulfonium groups.

3. A latex as claimed in claim 1 or claim 2 in which the functional monomer comprises from 20% to 90% of the copolymer.

4. A latex as claimed in any one of the preceding claims in which the acrylic resin particles are in the form of a terpolymer formed by polymerizing the functional monomer and cross-linking monomer in the presence of a hydrophilic non-functional ethylenically unsaturated spacer monomer which also forms part of the copolymer backbone.

5. A latex as claimed in claim 4 in which the acrylic resin particles comprise from 10% to 80% of the spacer monomer and the cross-linking monomer.

6. A latex as claimed in claim 4 in which the acrylic resin particles comprise from 8% to 50% of the cross-linking monomer.

7. A latex as claimed in any one of the preceding claims in which the functional monomer is glycidyl acrylate or glycidyl methacrylate.

8. A latex as claimed in any one of the preceding claims in which the cross-linking monomer is ethylene glycol diacrylate, ethylene glycol dimethacrylate, diethylene glycol dimethacrylate, diethylene glycol diacrylate, triethylene glycol diacrylate, triethylene glycol dimethacrylate, polyethylene glycol dimethyacrylate or glyceryl trimethacrylate.

9. A latex as claimed in claim 4 in which the spacer monomer is methyl acrylate, methyl methacrylate, hydroyethyl methyacrylate, ethyl acrylate, ethyl methacrylate, hydroxyethyl acrylate or glyceryl mono-methacrylate.

10. An anion exchange composition comprising support particles with cation exchange sites at their exposed surfaces, and fine synthetic acrylic resin layering particles having anion exchange sites at their exposed surfaces, the acrylic resin comprising a copolymer backbone of a hydrophilic acrylic functional monomer and a hydrophilic diethylenically unsaturated cross-linking monomer, the functional monomer including reactive groups covalently bound to anion exchanging sites, the cross-linking monomer spacing apart the reactive groups in the backbone and also cross-linking adjacent polymer chains, the anion exchange sites being attracted to the support particles so that the layering particles are irreversibly attached to the support particles.

11. A composition as claimed in claim 10 in which the support particles are comprised of synthetic resin.

12. A composition as claimed in claim 10 or claim 11 in a packed chromatographic column.

13. A composition as claimed in claim 10 in which the support particles comprise an inorganic oxide, preferably silica, alumina, zirconium dioxide, lead dioxide or tin dioxide.

14. A composition as claimed in any one of claims 10 to 13 in which the anion exchange sites comprise quaternary ammonium ions.

15. A composition as claimed in any one of claims 10 to 14 in which the layering particles are in the form of a terpolymer as claimed in any one of claims 4 to 9.

16. A composition as claimed in any one of claims 10 to 15 in which the anion exchange sites are amine groups, quaternary ammonium groups, phosphonium groups or sulfonium groups.